# EUROPEAN PATENT SPECIFICATION

(11) **EP 3 960 701 B1**
(45) Date of publication and mention of the grant of the patent: **27.11.2024**
(21) Application number: 19926514.1
(22) Date of filing: 23.04.2019
(51) Int. Cl.: C01B 3/38, C01B 3/32

(54) **GAS PRODUCTION SYSTEM AND GAS PRODUCTION METHOD**
GASERZEUGUNGSSYSTEM UND GASERZEUGUNGSVERFAHREN
SYSTÈME DE PRODUCTION DE GAZ ET PROCÉDÉ DE PRODUCTION DE GAZ

(43) Date of publication of application: 02.03.2022
(73) Proprietor: MITSUBISHI ELECTRIC CORPORATION, Chiyoda-ku Tokyo 100-8310 (JP); Tokyo Institute of Technology, Tokyo 152-8550 (JP)
(72) Inventor: AKETAGAWA, Kyohei, Tokyo 100-8310 (JP); HIRASHIKI, Isamu, Tokyo 100-8310 (JP); NOZAKI, Tomohiro, Tokyo 152-8550 (JP); SAKATA, Kenta, Tokyo 152-8550 (JP)
(74) Representative: Meissner Bolte Partnerschaft mbB
(86) International application number: PCT/JP2019/017117
(87) International publication number: WO 2020/217290

(56) References cited:
- JP-A- 2002 037 606
- JP-A- 2010 516 610
- JP-A- 2015 020 929
- US-A1- 2004 028 964
- US-A1- 2004 202 592
- US-A1- 2012 167 464
- US-A1- 2016 121 296

## Description

### TECHNICAL FIELD

The present invention relates to a gas production system and a gas production method.

### BACKGROUND ART

Conventionally, there has been known a method using a catalyst for producing useful gases such as hydrogen gas and ammonia gas. In this production method, a mixed gas composed of two or more kinds containing a source gas serving as a source of a product gas and an oxidant gas for oxidizing the source gas is introduced as a treatment target gas into a catalyst reaction field, and the treatment target gas is reacted under a high-temperature environment, whereby the product gas is produced.

In a case where the treatment target gas is a mixed gas containing a hydrocarbon-based gas and water vapor or a molecular oxygen containing gas, hydrogen gas can be produced as a product gas (for example, Patent Document 1). In a case where the treatment target gas is a mixed gas containing hydrogen gas and carbon monoxide gas, methane gas, an alcohol, or the like can be produced as a product gas, and in a case where the treatment target gas is a mixed gas containing a hydrocarbon-based gas and air, ammonia gas can be produced as a product gas (for example, Patent Document 2).

In the above mentioned gas production methods, in order to increase the yield (production amount) of the product gas, it is necessary to set the environment of the catalyst reaction field to an extremely high temperature, so that great thermal energy needs to be inputted. Therefore, energy efficiency is low and the production cost for the product gas is high. Accordingly, improvement of energy efficiency in production of the product gas is required.

As an example of a method for improving energy efficiency in production of the product gas, a gas production method using plasma is known, and plasma is also used in Patent Document 1 and Patent Document 2. US 2004/028964 Al relates to a control system for a fuel reformer, and more particularly to a control system for controlling the oxygen-to-carbon ratio of a fuel reformer.

### CITATION LIST

### PATENT DOCUMENT

Patent Document 1: JP 2005-35 852 A
Patent Document 2: JP 2002-241 774 A

### SUMMARY OF THE INVENTION

### PROBLEMS TO BE SOLVED BY THE INVENTION

The reason why it is possible to increase the yield of the product gas and improve energy efficiency by using plasma is that not only a gas reactive material in the treatment target gas can be excited by the plasma but also highly reactive chemical species such as ions and radicals are formed on the catalyst surface by the plasma.

However, in a conventional gas production system using catalyst reaction and plasma, the mixed gas composed of two or more kinds containing a source gas serving as a source of the product gas and an oxidant gas for oxidizing the source gas continues to be supplied as the treatment target gas. Therefore, while there is a possibility that the gas reactive material in the treatment target gas can be excited by the plasma, the effect of forming the highly reactive chemical species such as ions or radicals on the catalyst surface is not obtained sufficiently, so that improvement of the yield of the product gas and energy efficiency might be suppressed.

The present invention has been made to solve the above problem, and an object of the present invention is to provide a gas production system and a gas production method that can improve the yield of the product gas and energy efficiency by efficiently promoting formation of highly reactive chemical species on the catalyst surface.

### SOLUTION TO THE PROBLEMS

According to the invention, the problem is solved by the subject matter outlined in independent claims 1 and 12. Advantageous further developments of the invention are set forth in the dependent claims.

### EFFECT OF THE INVENTION

The gas production system and the gas production method according to the present invention can efficiently promote formation of highly reactive chemical species on the catalyst surface, thus making it possible to provide a gas production system and a gas production method that can improve the yield of the product gas and energy efficiency.

### BRIEF DESCRIPTION OF THE DRAWINGS

- FIG. 1A: schematically shows the configuration of a gas production system according to Embodiment 1.
- FIG. 1B: schematically shows a sectional view along line X-X in FIG. 1A.
- FIG. 2: is a chart showing an operation flow of the gas production system according to Embodiment 1.
- FIG. 3: schematically shows the configuration of a gas production system according to Embodiment 2.
- FIG. 4: schematically shows the configuration of a gas production system according to Embodiment 3.
- FIG. 5: schematically shows the configuration of a gas production system according to Embodiment 4.

### DESCRIPTION OF EMBODIMENTS

Hereinafter, embodiments of a gas production system and a gas production method will be described with reference to the drawings. It is noted that the embodiments described below are merely examples and are not intended to limit the present invention. In the drawings, the same reference characters denote the same or corresponding parts.

### Embodiment 1

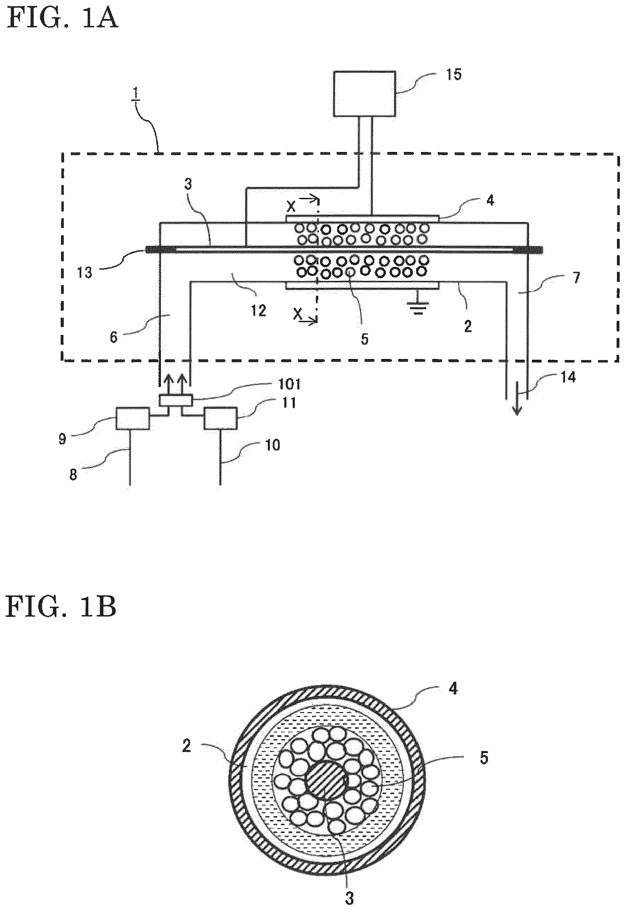

Hereinafter, a gas production system according to Embodiment 1 will be described. FIG. 1A schematically shows the configuration of the gas production system according to Embodiment 1. The gas production system includes: a gas production device 1 having a reactor 2, a first electrode 3 and a second electrode 4 for generating plasma, and a catalyst layer 5; an external power supply 15 connected to the first electrode 3 and the second electrode 4 and configured to supply power; source gas supply means 9 for supplying a source gas 8 to the reactor 2; oxidant gas supply means 11 for supplying an oxidant gas 10 to the reactor 2; and the like. In FIG. 1A, the cross section of the gas production device 1 is shown.

The gas production device 1 includes a supply portion 6 and a flow-out portion 7, and the supply portion 6 and the flow-out portion 7 are connected to the reactor 2. The source gas 8 and the oxidant gas 10 are supplied from the supply portion 6 to the reactor 2. The reactor 2 forms a flow path 12 through which the source gas 8 and the oxidant gas 10 flow. The first electrode 3 is provided inside the reactor 2, and the second electrode 4 is provided outside the reactor 2.

The second electrode 4 is grounded, and the first electrode 3 is connected to the reactor 2 via a supporter 13 and is fixed in a state of being insulated from the second electrode 4. In a space between the first electrode 3 and the second electrode 4 in the flow path 12, the catalyst layer 5 is provided and includes a catalyst for causing a reaction of reforming the source gas 8 and the oxidant gas 10 into a product gas 14. The product gas 14 reformed through the catalyst reaction in the catalyst layer 5 is sent through the flow-out portion 7 to the outside of the gas production device 1.

The first electrode 3 and the second electrode 4 are connected to the external power supply 15, and the external power supply 15 generates high voltage to generate plasma in the space between the first electrode 3 and the second electrode 4. The type of the plasma is not particularly limited, but in terms of energy efficiency, a preferable type is non-equilibrium plasma in which the electron temperature is much higher than the gas temperature and thus the catalyst reaction of the source gas 8 and the oxidant gas 10 can be activated at a comparatively low temperature.

The configuration of the gas production device 1 is not particularly limited as long as the gas production device 1 includes the reactor 2, the first electrode 3, and the second electrode 4, and the source gas 8 and the oxidant gas 10 are supplied to the catalyst layer 5 provided in the space between the first electrode 3 and the second electrode 4.

However, in order to efficiently activate the catalyst reaction of the source gas 8 and the oxidant gas 10, it is preferable that the plasma can be generated along the surface of the catalyst in the catalyst layer 5, and it is preferable that the gas production device 1 has a cylindrical shape. FIG. 1B schematically shows a sectional view along line X-X in FIG. 1A. As shown in FIG. 1B, it is preferable that the reactor 2 and the second electrode 4 have cylindrical shapes, the reactor 2 is coated with the second electrode 4, and the first electrode 3 has a bar shape and is placed on the center axis of the reactor 2.

The materials of the first electrode 3 and the second electrode 4 are not particularly limited as long as they can generate plasma with high voltage from the external power supply 15, and may be known materials such as copper, iron, and tungsten. In view of corrosion of the electrodes, an alloy such as stainless steel resistant to corrosion is preferably used. In addition, the material of the reactor 2 is preferably a dielectric material, and may be a known material such as ceramic or glass.

The form of the catalyst forming the catalyst layer 5 is not particularly limited, and may be a pellet form, a granular form, or the like.

While the source gas 8 and the oxidant gas 10 are being supplied from the supply portion 6 into the reactor 2, when high voltage is generated by the external power supply 15, plasma can be generated in the catalyst layer 5 provided in the space between the first electrode 3 and the second electrode 4 in the reactor 2. In the catalyst layer 5, the source gas 8 and the oxidant gas 10 are reformed into the product gas 14.

The source gas 8 is supplied to the reactor 2 by the source gas supply means 9, and the oxidant gas 10 is supplied to the reactor 2 by the oxidant gas supply means 11. As shown in FIG. 1A, gas ratio change means 101 having a function of controlling the supply amount of the source gas 8 and changing the supply amount is provided between the source gas supply means 9 and the supply portion 6.

The gas ratio change means 101 prescribes one cycle and a reference supply amount of the source gas 8, sets a time ST for supplying the source gas 8 in the reference supply amount and a time CT for supplying the source gas 8 in a supply amount smaller than the reference supply amount in the one cycle, and repeatedly executes such an operation. Thus, the ratio between the supply amount of the source gas 8 to the reactor 2 and the supply amount of the oxidant gas 10 to the reactor 2 can be changed.

Regarding the changing of the ratio between the supply amount of the source gas 8 and the supply amount of the oxidant gas 10, the gas ratio change means 101 may prescribe one cycle and a reference supply amount of the oxidant gas 10, set a time ST_{O} for supplying the oxidant gas 10 in the reference supply amount and a time CT_{O} for supplying the oxidant gas 10 in a supply amount larger than the reference supply amount in the one cycle, and repeatedly execute such an operation.

Further, the gas ratio change means 101 may perform control so as to change the supply amounts of both the source gas 8 and the oxidant gas 10. Although the gas ratio change means 101 is provided between the supply portion 6, and the source gas supply means 9 and the oxidant gas supply means 11 in FIG. 1A, the source gas supply means 9 or the oxidant gas supply means 11 may have the function of the gas ratio change means 101, or both of them may have the function. In this case, the gas ratio change means 101 may be provided in the source gas supply means 9 or the oxidant gas supply means 11, or may be provided in both of them.

When the source gas 8 is supplied in the reference supply amount, gas reactive materials in the oxidant gas 10 and the source gas 8 can be efficiently excited by the plasma. On the other hand, when the source gas 8 is supplied in a supply amount smaller than the reference supply amount, the oxidant gas 10 is made abundant as compared to the source gas 8, so that the oxidant gas 10 is more likely to be excited by the plasma.

Thus, formation of active oxygen species which are highly reactive chemical species is promoted on the catalyst surface in the catalyst layer 5. In a state in which active oxygen species which are highly reactive chemical species are formed on the catalyst surface in the catalyst layer 5, if supply of the source gas 8 in the reference supply amount is restarted (the next cycle begins), the synergistic effect of the plasma and the catalyst reaction increases, whereby the yield of the product gas and energy efficiency can be improved.

The external power supply 15 for generating high voltage is not particularly limited and may be a known power supply such as an AC power supply or a pulse power supply. Therefore, the signal waveform of the external power supply 15 may be a sine wave, a pulse wave, a rectangular wave, or the like, and is not particularly limited.

In addition, the magnitude of high voltage generated by the external power supply 15 is not particularly limited as long as plasma can be generated in the space between the first electrode 3 and the second electrode 4. However, if the magnitude of the high voltage is extremely low, plasma cannot be generated, and conversely, if the magnitude of the high voltage is extremely high, power consumption increases and energy efficiency is reduced. Therefore, the magnitude of the high voltage is preferably not less than 0.5 kV and not greater than 10 kV, and more preferably not less than 1 kV and not greater than 5 kV.

The time ST for supplying the source gas 8 in the reference supply amount, and a ratio ST/CT of the time ST for supplying the source gas 8 in the reference supply amount to the time CT for supplying the source gas 8 in a supply amount smaller than the reference supply amount, can be set as appropriate in consideration of the amount of the prepared source gas 8, the planned amount of the product gas 14, and the like, and are not particularly limited.

However, if the time ST for supplying the source gas 8 in the reference supply amount is extremely long, there is a possibility that the amount of chemical species on the catalyst surface in the catalyst layer 5 is reduced to be insufficient. Meanwhile, if the time CT for supplying the source gas 8 in a supply amount smaller than the reference supply amount is long and thus ST/CT is small, the amount of the product gas 14 decreases and production performance for the product gas 14 is reduced.

Therefore, the time ST for supplying the source gas 8 in the reference supply amount is preferably not less than 5 minutes and not greater than 120 minutes, and more preferably not less than 15 minutes and not greater 60 minutes. In addition, the ratio ST/CT is preferably not less than 0.5 and not greater than 10, and more preferably not less than 1 and not greater than 3.

As the frequency of the high voltage of the external power supply 15 becomes higher, the density of electrons in the generated plasma becomes greater, and therefore, the effect of promoting formation of highly reactive chemical species on the catalyst surface in the catalyst layer 5 by the plasma when the source gas 8 is supplied in a supply amount smaller than the reference supply amount, is increased.

However, if the frequency of the high voltage of the external power supply 15 is higher than necessary, the density of electrons becomes excessive, and power consumption needed for generating plasma increases, so that energy efficiency can be reduced. Therefore, the frequency of the high voltage of the external power supply 15 is preferably not less than 50 Hz and not greater than 13.56 MHz.

In addition, in consideration of the influence of the frequency, the time ST for supplying the source gas 8 in the reference supply amount and the ratio ST/CT of the time ST for supplying the source gas 8 in the reference supply amount to the time CT for supplying the source gas 8 in a supply amount smaller than the reference supply amount may be adjusted in accordance with the frequency of the high voltage of the external power supply 15.

For example, in a case where the frequency of the high voltage of the external power supply 15 is low, in order to ensure the effect of promoting formation of chemical species on the catalyst surface in the catalyst layer 5, the time CT for supplying the source gas 8 in a supply amount smaller than the reference supply amount is increased to reduce the ratio ST/CT. In a case where the frequency of the high voltage of the external power supply 15 is high, in order to suppress reduction in energy efficiency due to increased power consumption needed for generating plasma, the time ST for supplying the source gas 8 in the reference supply amount can be increased.

Also for the prescribed reference supply amount of the source gas 8 from the source gas supply means 9, the value thereof may be set as appropriate in consideration of the amount of the prepared source gas 8, the planned amount of the product gas 14, or the like, and is not particularly limited. However, in consideration of reaction efficiency of the source gas 8 and the oxidant gas 10, it is preferable that the reference supply amount of the source gas 8 is determined on the basis of a stoichiometric ratio determined by the kinds and reaction of the source gas 8 and the oxidant gas 10.

For example, in a case where the source gas 8 is hydrogen, the oxidant gas 10 is carbon monoxide, and the product gas 14 is methane, the main reaction is represented by the following Expression (1). Therefore, preferably, the reference supply amount is determined such that the partial pressure of hydrogen which is the source gas 8 is three times the partial pressure of carbon monoxide which is the oxidant gas 10. Thus, during the time for supplying the source gas 8 in a supply amount smaller than the reference supply amount, a state in which the oxidant gas 10 is abundant as compared to the source gas 8 can easily be made.

3H₂ + CO → CH₄ + H₂O ... (1)

The source gas supply means 9 and the oxidant gas supply means 11 may be any means and have any configurations as long as the source gas 8 and the oxidant gas 10 can be supplied to the reactor 2. For example, in a case where the source gas 8 and the oxidant gas 10 are stored as high-pressure gases in cylinders, the source gas 8 and the oxidant gas 10 can be supplied to the reactor 2 owing to the pressure difference between the cylinders and the gas production device 1. In a case where a gas transportation device such as a pump is provided, the source gas 8 and the oxidant gas 10 can be supplied to the reactor 2 by operation of the gas transportation device.

The gas ratio change means 101 may be any means as long as the supply amount of the source gas 8 to the reactor 2 can be controlled and changed or the ratio of the supply amounts of the source gas 8 and the oxidant gas 10 can be controlled and changed. A known device for controlling a gas flow rate, such as a flow regulating valve or a mass flow controller, can be used. Instead of supplying the source gas 8 in a supply amount smaller than the reference supply amount, supply of the source gas 8 may be completely stopped.

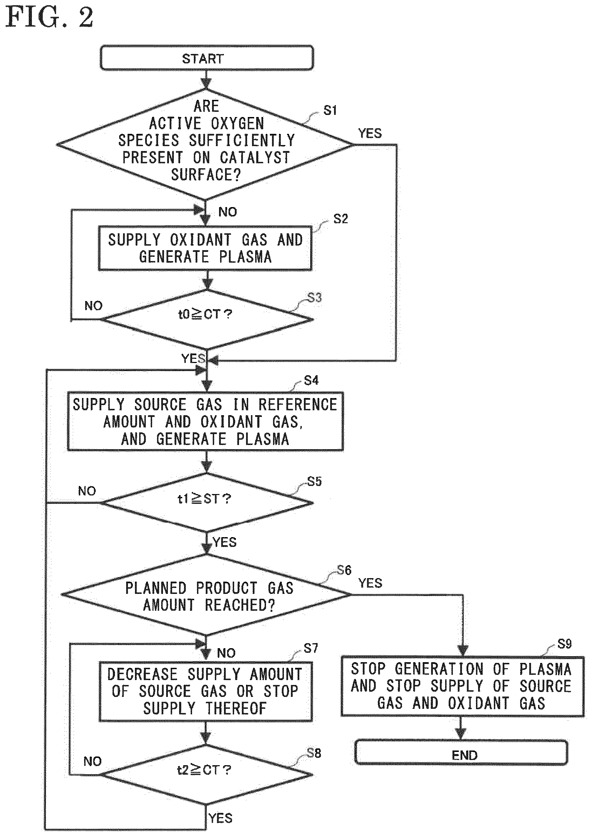

FIG. 2 is a chart showing an operation flow of the gas production system according to Embodiment 1, and shows a production method for the product gas. This gas production method includes a source gas supply step, an oxidant gas supply step, a plasma application step, a reforming step, and a gas ratio change step.

First, in step S1, whether or not active oxygen species are sufficiently present on the catalyst surface in the catalyst layer 5 in the reactor 2 is determined, and if it is determined that active oxygen species are sufficiently present (YES in step S1), the process proceeds to step S4. If active oxygen species are not sufficiently present on the catalyst surface (NO in step S1), in step S2, the oxidant gas 10 is supplied to the catalyst layer 5 in the reactor 2 by the oxidant gas supply means 11, and high voltage is applied between the first electrode 3 and the second electrode 4 by the external power supply 15, to generate plasma in the catalyst layer 5.

By the generation of plasma, active oxygen species are formed on the catalyst surface in the catalyst layer 5. The determination as to whether active oxygen species are sufficiently present on the catalyst surface in the catalyst layer 5 in the reactor 2 in step S1 may be made on the basis of the elapsed time since the last operation of the gas production system, or elapse of time or the processing sequence indicating whether or not the last operation of the gas production system was ended after active oxygen species were formed on the catalyst surface, for example. The above step S2 is an example of the oxidant gas supply step and the plasma application step.

Step S3 is a step of determining whether or not active oxygen species are sufficiently formed on the catalyst surface in the catalyst layer 5 through the processing in step S2, and this can be determined on the basis of whether or not a processing time t0 in step S2 has reached a predetermined time CT, for example. Here, the time CT is the time CT for supplying the source gas 8 in a supply amount smaller than the reference supply amount as described above, but is not limited thereto. Step S2 is repeated until the processing time t0 reaches the time CT or it is determined that active oxygen species are sufficiently formed.

In the next step S4, to the catalyst layer 5 in the reactor 2, the source gas 8 is supplied in the prescribed reference supply amount by the source gas supply means 9 and the oxidant gas 10 is supplied by the oxidant gas supply means 11, and high voltage is applied between the first electrode 3 and the second electrode 4 by the external power supply 15, whereby plasma is generated and thus the plasma is applied to the catalyst layer 5. After the step S3, generation of plasma may be stopped, or the plasma may continue to be generated until this step S4. This step S4 includes examples of the source gas supply step, the oxidant gas supply step, and the plasma application step. In step S4 including these three steps, the product gas 14 is produced from the source gas 8 and the oxidant gas 10 in the catalyst layer 5.

In step S5, whether or not the processing time t1 in step S4 has reached the time ST for supplying the source gas 8 in the reference supply amount in one cycle prescribed by the gas ratio change means 101 is determined, and until the time ST is reached, the process returns to step S4 and the processing in step S4 is continued. The processing in step S4 that is being continued is an example of the reforming step. If the processing time t1 in step S4 has reached the time ST (YES in step S5), the process proceeds to the next step S6.

In step S6, if the product gas 14 generated by reformation of the source gas 8 and the oxidant gas 10 has reached a planned production amount (YES in step S6), the process proceeds to step S9. If the product gas 14 has not reached the planned production amount (NO in step S6), the process proceeds to step S7.

In step S7, by the source gas supply means 9, the supply amount of the source gas 8 is decreased to a value smaller than the reference supply amount prescribed in advance, or supply of the source gas 8 is stopped. This step S7 is an example of the gas ratio change step, and in this step, formation of active oxygen species is promoted on the catalyst surface in the catalyst layer 5 in the reactor 2.

In step S8, whether or not a processing time t2 in step S5 has reached the time CT for supplying the source gas 8 in a supply amount smaller than the reference supply amount in one cycle prescribed by the gas ratio change means 101, is determined, and until the time CT is reached, the process returns to step S7 and the processing is continued. If the processing time t2 in step S7 has reached the time CT (YES in step S8), the process returns to step S4, to set the supply amount of the source gas 8 to the reference supply amount.

The reforming step processing in step S4 and the gas ratio change step processing in step S7 are repeatedly executed during the time ST and the time CT in one cycle prescribed by the gas ratio change means 101, to produce the product gas 14 until reaching the planned product gas amount.

If the produced product gas 14 has reached the planned product gas amount, in step S9, application of high voltage between the first electrode 3 and the second electrode 4 is stopped by the external power supply 15, so that generation of plasma is stopped. Supply of the source gas 8 and the oxidant gas 10 is stopped by the source gas supply means 9 and the oxidant gas supply means 11, respectively. Thus, a series of gas production steps is finished.

In the process of the gas production method described above, step S6 may be performed at a stage subsequent to step S8, to determine whether or not the planned product gas amount has been reached per one cycle prescribed by the gas ratio change means 101. In this case, the process is finished in a state in which active oxygen species are formed on the catalyst surface in the catalyst layer 5 in the reactor 2, and therefore it becomes possible to skip step S2 or shorten the processing time in step S2, in the next operation of the gas production system.

In step S7, the case of performing the gas ratio change step by changing the supply amount of the source gas 8 from that in step S4 has been described as an example. However, as described above, the supply amount of the oxidant gas 10 may be used as a reference. That is, the process may be performed such that, in step S4, the oxidant gas 10 is supplied in a reference supply amount during the time ST_{O}, and in step S7, the oxidant gas 10 is supplied in a supply amount larger than the reference supply amount during the time CT_{O}. Further, the gas ratio change means 101 may perform control so as to change both supply amounts of the source gas 8 and the oxidant gas 10.

As described above, according to Embodiment 1, the gas production system includes the gas ratio change means 101 capable of changing the ratio between the source gas 8 and the oxidant gas 10, whereby a state in which the oxidant gas 10 for oxidizing the source gas 8 is abundant as compared to the source gas 8 can be made and formation of active oxygen species which are highly reactive chemical species is promoted on the catalyst surface in the catalyst layer 5. Thus, the synergistic effect of the plasma and catalyst reaction is increased, so that the yield of the product gas 14 and energy efficiency can be improved.

In Embodiment 1, it has been described that the cross sections of the reactor 2 and the second electrode 4 have annular shapes, the reactor 2 is coated with the second electrode 4, and the first electrode 3 has a bar shape and is placed on the center axis of the reactor 2, as an example of the configuration. However, the present invention is not limited to the above example. For example, the cross sections of the reactor 2 and the second electrode 4 may be rectangular shapes as long as the same function is obtained.

### Embodiment 2

Hereinafter, a gas production system according to Embodiment 2 will be described. The configuration and the operation of the gas production system according to Embodiment 2 are basically the same as those in Embodiment 1, while a difference is that the gas production system according to Embodiment 2 includes: a second gas production device 16 having the same components as in the gas production device 1; a second external power supply 17 for supplying power to the second gas production device 16; a source gas branch portion 19 for supplying the source gas 8 to the second gas production device 16; second source gas supply means 20; an oxidant gas branch portion 21 for supplying the oxidant gas 10 to the second gas production device 16; second oxidant gas supply means 22; and second gas ratio change means 102.

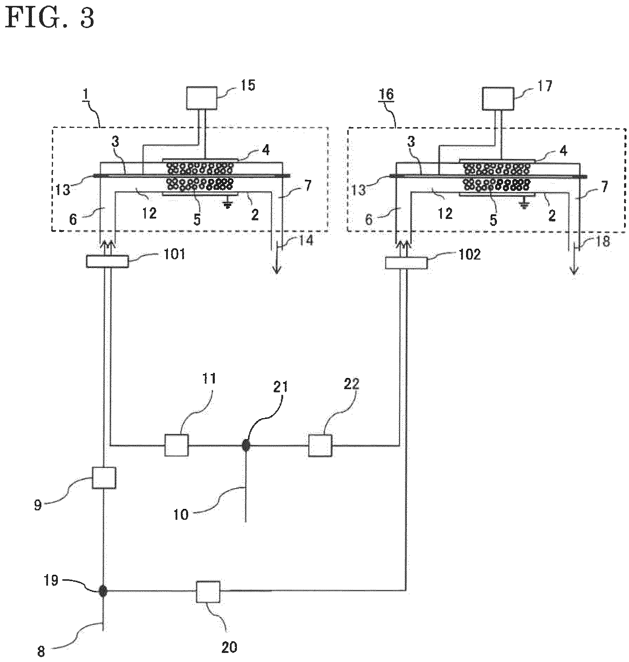

FIG. 3 schematically shows the configuration of the gas production system according to Embodiment 2. In the drawing, the same components and members as those of the gas production system according to Embodiment 1 are denoted by the same reference characters, and description thereof is omitted unless particularly needed. In FIG. 3, the gas production system according to Embodiment 2 includes, in addition to the gas production device 1, the second gas production device 16 having the same components as those of the gas production device 1.

That is, the second gas production device 16 includes all the components corresponding to the reactor 2, the first electrode 3, the second electrode 4, the catalyst layer 5, the supply portion 6, the flow-out portion 7, the flow path 12, and the supporter 13, and is the same mechanism as the gas production device 1. Thus, high voltage is applied by the second external power supply 17 so as to generate plasma in the reactor 2, whereby a second product gas 18 can be obtained. In the present embodiment, the gas production devices 1, 16 produce the same gases, i.e., the product gases 14, 18 are equivalent.

In addition, since the source gas branch portion 19, the second source gas supply means 20, the oxidant gas branch portion 21, and the second oxidant gas supply means 22 are provided, the source gas 8 and the oxidant gas 10 can be supplied to not only the gas production device 1 but also the second gas production device 16. Further, by the second gas ratio change means 102, the supply amount of the source gas 8 to the second gas production device 16 can be controlled and changed independently of the gas ratio change means 101.

With the gas production device 1 and the second gas production device 16 provided, production performance for the product gases 14, 18 can be enhanced. That is, while, in the gas production device 1, the source gas 8 is being supplied in a supply amount smaller than the reference supply amount so as to make the oxidant gas 10 abundant as compared to the source gas 8 and thus formation of chemical species is being promoted on the catalyst surface in the catalyst layer 5 (gas ratio change step), the source gas 8 can be supplied in the reference supply amount in the second gas production device 16 to produce the second product gas 18 (gas reforming step).

Conversely, while, in the second gas production device 16, the source gas 8 is being supplied in a supply amount smaller than the reference supply amount (gas ratio change step), the source gas 8 can be supplied in the reference supply amount in the gas production device 1 to produce the product gas 14 (gas reforming step).

In the gas production device 1, during the gas ratio change step, the amount of the product gas 14 is decreased and production performance for the product gas 14 is reduced. During this period, in the second gas production device 16, the second product gas 18 can be produced in the gas reforming step. Subsequently, in the gas production device 1, the gas reforming step is performed under high catalyst activity, whereby the product gas 14 is efficiently produced, and during this period, in the second gas production device 16, the gas ratio change step is performed so that formation of chemical species for activating the catalyst surface is promoted. Thus, production performance for the product gases 14, 18 can be enhanced.

That is, while production performance for the product gas 14 is being reduced in the gas production device 1 in order to obtain an effect of increasing the synergistic effect of plasma and catalyst reaction by maintaining high catalyst activity, production performance for the second product gas 18 can be ensured in the second gas production device 16, and while production performance for the product gas 14 is being ensured in the gas production device 1, high catalyst activity can be maintained in the second gas production device 16 so as to obtain an effect of increasing the synergistic effect of plasma and catalyst reaction. Thus, production performance for the product gas in the gas production system can be enhanced, and the yield of the product gas and energy efficiency can be improved.

Next, the supply time for the source gas 8 will be discussed.

A time ST1 for supplying the source gas 8 to the gas production device 1 in the reference supply amount, a ratio ST1/CT1 of the time for supplying the source gas 8 to the gas production device 1 in the reference supply amount to a time CT1 for supplying the source gas 8 to the gas production device 1 in a supply amount smaller than the reference supply amount, a time ST2 for supplying the source gas 8 to the second gas production device 16 in the reference supply amount, and a ratio ST2/CT2 of the time for supplying the source gas 8 to the second gas production device 16 in the reference supply amount to a time CT2 for supplying the source gas 8 to the second gas production device 16 in a supply amount smaller than the reference supply amount, can be set as appropriate in consideration of the amount of the prepared source gas 8, the planned amounts of the product gases 14, 18, and the like in the gas production device 1 and the second gas production device 16, and are not particularly limited.

However, in terms of production performance for the product gas, it is preferable that CT1 and ST2 are the same value and ST1 and CT2 are the same value. Thus, the product gas (product gas 14 or second product gas 18) can be continuously produced. In addition, for example, in a case where the product gas 14 and the second product gas 18 are to be produced in the same amount, ST1, CT1, ST2, and CT2 may be equal.

The configurations and the materials of the components of the second gas production device 16 need not be completely the same as those of the gas production device 1 as long as equivalent functions can be obtained. In addition to the second gas production device 16, a plurality of gas production devices having the same components as those of the gas production device 1 may be further provided.

As described above, the gas production system according to Embodiment 2 can provide the same effects as in Embodiment 1.

Further, in the gas production system according to Embodiment 2, the second gas production device 16 having a configuration equivalent to the gas production device 1 is provided, the source gas 8 and the oxidant gas 10 can be supplied to both of the gas production device 1 and the second gas production device 16, and the second gas ratio change means 102 is provided, whereby the supply amount of the source gas 8 to the second gas production device 16 can be changed and the ratio between the source gas 8 and the oxidant gas 10 can be changed.

Thus, while the gas ratio change step is being performed in the gas production device 1, the second gas production device 16 produces the second product gas 18 in the gas reforming step. Then, in the gas production device 1, the product gas 14 is effectively produced during the gas reforming step under high catalyst activity, and during this period, the gas ratio change step is performed in the second gas production device 16 to promote formation of chemical species for activating the catalyst surface. In this way, production performance for the product gases 14, 18 can be enhanced.

That is, while high catalyst activity is being maintained in the gas production device 1 to obtain an effect of increasing the synergistic effect of plasma and catalyst reaction, production performance can be ensured in the second gas production device 16, and while production performance is being ensured in the gas production device 1, high catalyst activity can be maintained in the second gas production device 16 to obtain an effect of increasing the synergistic effect of plasma and catalyst reaction. Therefore, production performance for the product gas in the gas production system can be enhanced, and the yield of the product gas and energy efficiency can be improved.

In the above description, the example in which the number of the gas production devices, i.e., the reactors having the catalyst layers, is two has been shown. However, three or more reactors may be provided. In a case of providing three or more reactors, the processing steps for the reactors may be sequentially switched so that, while at least one of the plurality of reactors is undergoing the source gas supply step, not all the other reactors undergo the source gas supply step. For example, the steps can be sequentially switched as follows.

When the first gas production device undergoes the source gas supply step and then the gas reforming step is finished, next, the second gas production device is switched from the gas ratio change step to the source gas supply step. Then, when the source gas supply step and the gas reforming step are finished in the second gas production device, next, the third gas production device is switched from the gas ratio change step to the source gas supply step. In a case of providing four reactors, they may be divided into two groups, and the steps may be switched between the first group and the second group.

### Embodiment 3

Hereinafter, a gas production system according to Embodiment 3 will be described. The configuration and the operation of the gas production system according to Embodiment 3 are basically the same as those in Embodiment 2, but Embodiment 3 shows an example in which a hydrocarbon-based gas 23 is supplied as the source gas 8 to the gas production device 1 or the second gas production device 16, a hydrogen containing gas 24 is produced as the product gas 14, and a second hydrogen containing gas 25 is produced as the second product gas 18.

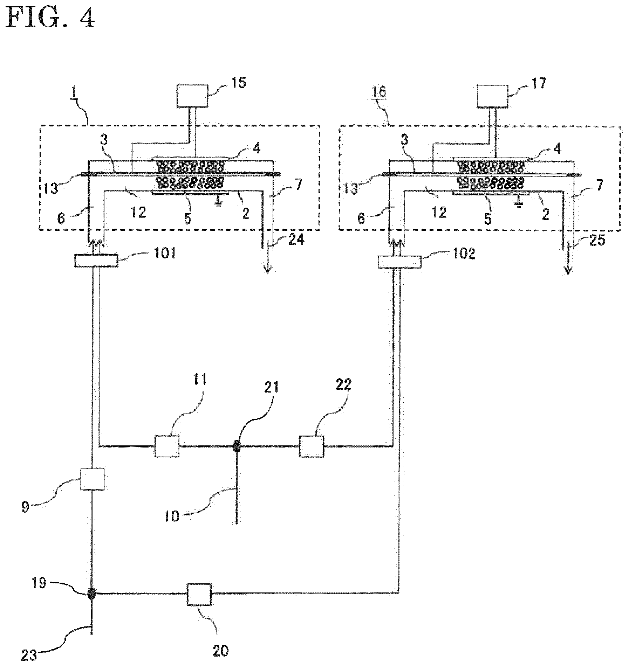

FIG. 4 schematically shows the configuration of the gas production system according to Embodiment 3. In the drawing, the same components and members as those of the gas production system according to Embodiment 2 are denoted by the same reference characters, and description thereof is omitted unless particularly needed.

In the gas production system according to Embodiment 3, the hydrocarbon-based gas 23 and the oxidant gas 10 are supplied from the supply portion 6 to the gas production device 1. While the hydrocarbon-based gas 23 and the oxidant gas 10 are being supplied from the supply portion 6 to the gas production device 1, high voltage is applied between the first and second electrodes 3 and 4 by the external power supply 15, to generate plasma in the catalyst layer 5.

The hydrocarbon-based gas 23 and the oxidant gas 10 react in the catalyst layer 5 so as to be reformed, whereby the hydrogen containing gas 24 is produced. Similarly, also in the second gas production device 16, while the hydrocarbon-based gas 23 and the oxidant gas 10 are being supplied to the second gas production device 16, high voltage is applied by the second external power supply 17, to generate plasma, and the second hydrogen containing gas 25 is produced from the hydrocarbon-based gas 23 and the oxidant gas 10.

With the gas production device 1 and the second gas production device 16 provided, production performance for the hydrogen containing gases 24, 25 can be enhanced. That is, while, in the gas production device 1, the hydrocarbon-based gas 23 is being supplied in a supply amount smaller than the reference supply amount so as to make the oxidant gas 10 abundant as compared to the source gas 8 and thus formation of chemical species is being promoted on the catalyst surface in the catalyst layer 5 (gas ratio change step), the hydrocarbon-based gas 23 can be supplied in the reference supply amount in the second gas production device 16 to produce the second hydrogen containing gas 25 (gas reforming step).

Conversely, while, in the second gas production device 16, the hydrocarbon-based gas 23 is being supplied in a supply amount smaller than the reference supply amount (gas ratio change step), the hydrocarbon-based gas 23 can be supplied in the reference supply amount in the gas production device 1 to produce the hydrogen containing gas 24 (gas reforming step).

In the gas production device 1, during the gas ratio change step, the production amount of the hydrogen containing gas 24 is decreased and production performance for the product gas 14 is reduced. During this period, in the second gas production device 16, the second hydrogen containing gas 25 can be produced in the gas reforming step.

Subsequently, in the gas production device 1, the gas reforming step is performed under high catalyst activity, whereby the hydrogen containing gas 24 is efficiently produced, and during this period, in the second gas production device 16, the gas ratio change step is performed so that formation of chemical species for activating the catalyst surface is promoted.

Thus, production performance for the hydrogen containing gases 24, 25 can be enhanced. That is, while production performance for the hydrogen containing gas 24 is being reduced in the gas production device 1 in order to obtain an effect of increasing the synergistic effect of plasma and catalyst reaction by maintaining high catalyst activity, production performance for the second hydrogen containing gas 25 can be ensured in the second gas production device 16, and while production performance for the hydrogen containing gas 24 is being ensured in the gas production device 1, high catalyst activity can be maintained in the second gas production device 16 so as to obtain an effect of increasing the synergistic effect of plasma and catalyst reaction. Thus, production performance for the product gas in the gas production system can be enhanced, and the yield of the product gas and energy efficiency can be improved.

The hydrocarbon-based gas 23 is not particularly limited as long as the hydrocarbon-based gas 23 contains a carbon atom and a hydrogen atom and can be reformed into a hydrogen containing gas. For example, a hydrocarbon such as methane, ethane, or propane, an alcohol such as methanol or ethanol, or the like can be used.

Also the oxidant gas 10 is not particularly limited as long as the oxidant gas 10 can react with the hydrocarbon-based gas 23 and thus a hydrogen containing gas can be produced. Water vapor obtained by vaporizing water or a molecular oxygen containing gas such as carbon monoxide can be used. However, in terms of reactivity of the hydrocarbon-based gas 23 and the oxidant gas 10, it is preferable that the oxidant gas 10 is one kind of gas or a mixed gas of two or more kinds of gases, selected from water vapor, carbon dioxide gas, and oxygen gas.

Also for the reference supply amount of the hydrocarbon-based gas 23 prescribed by the gas ratio change means 101, the value thereof may be set as appropriate in consideration of the amount of the prepared hydrocarbon-based gas 23, the planned production amount of the hydrogen containing gas 24, or the like, and is not particularly limited. However, in consideration of reaction efficiency of the hydrocarbon-based gas 23 and the oxidant gas 10, it is preferable that the reference supply amount of the hydrocarbon-based gas 23 is determined on the basis of a stoichiometric ratio determined by the kinds and reaction of the hydrocarbon-based gas 23 and the oxidant gas 10.

For example, in a case where the hydrocarbon-based gas 23 is methane and the oxidant gas 10 is carbon dioxide, the main reaction is represented by the following Expression (2). Therefore, preferably, the reference supply amount is determined such that the partial pressure of the hydrocarbon-based gas 23 is as great as the partial pressure of the oxidant gas 10. Thus, during the time for supplying the hydrocarbon-based gas 23 in a supply amount smaller than the reference supply amount, a state in which the oxidant gas 10 is abundant as compared to the hydrocarbon-based gas 23 can be easily made.

CH₄ + CO₂ → 2CO + 2H₂ ... (2)

The reaction in which the hydrogen containing gas 24 is produced in the catalyst layer 5 of the gas production device 1 is formed from, in addition to a reaction in which the hydrocarbon-based gas 23 is oxidized by the oxidant gas 10 to generate hydrogen, a reaction in which the hydrocarbon-based gas 23 is decomposed to generate hydrogen, for example. At this time, carbon which constitutes the hydrocarbon-based gas 23 might be deposited on the catalyst surface.

The carbon deposited on the catalyst surface inhibits the reaction for producing the hydrogen containing gas 24, and this can lead to reduction in the yield of hydrogen gas in the hydrogen containing gas 24. In a case where the hydrocarbon-based gas 23 is methane and the oxidant gas 10 is carbon dioxide, a reaction in which the hydrocarbon-based gas 23 is decomposed to generate hydrogen is represented by the following Expression (3).

CH₄ → 2H₂ + C ... (3)

Thus, carbon (C) is deposited on the catalyst surface.

However, when the supply amount of the hydrocarbon-based gas 23 to the gas production device 1 is changed so that the ratio of the oxidant gas 10 to the hydrocarbon-based gas 23 is changed, and plasma is generated in a state in which the oxidant gas 10 for oxidizing the hydrocarbon-based gas 23 is abundant as compared to the hydrocarbon-based gas 23 (gas ratio change step), formation of active oxygen species which are highly reactive chemical species is promoted on the catalyst surface in the catalyst layer 5 and also a reaction of forming an oxide on the catalyst surface occurs. Owing to the formed oxide, it is possible to inhibit deposition of carbon on the catalyst surface when the hydrocarbon-based gas 23 is supplied in the reference supply amount (gas reforming step). Thus, the yield of hydrogen gas in the hydrogen containing gas 24 can be further improved and also energy efficiency can be further improved.

In the present embodiment, the kind of the catalyst is not particularly limited as long as the hydrocarbon-based gas 23 can be reformed into the hydrogen containing gas, and a known catalyst can be used. However, in terms of reactivity, it is preferable to use a catalyst containing a transition metal element such as nickel, iron, or cobalt.

As described above, the gas production system according to Embodiment 3 can provide the same effects as in Embodiment 2.

Further, in the gas production system according to Embodiment 3, the hydrocarbon-based gas 23 is used as the source gas. While the gas ratio change step is being performed in the gas production device 1, the second gas production device 16 produces the second hydrogen containing gas 25 in the gas reforming step. Then, in the gas production device 1, the hydrogen containing gas 24 is effectively produced during the gas reforming step under high catalyst activity, and during this period, the gas ratio change step is performed in the second gas production device 16 to promote formation of chemical species for activating the catalyst surface.

In this way, production performance for the hydrogen containing gases 24, 25 can be enhanced. That is, while high catalyst activity is being maintained in the gas production device 1 to obtain an effect of increasing the synergistic effect of plasma and catalyst reaction, production performance can be ensured in the second gas production device 16, and while production performance is being ensured in the gas production device 1, high catalyst activity can be maintained in the second gas production device 16 to obtain an effect of increasing the synergistic effect of plasma and catalyst reaction.

Therefore, production performance for the product gas in the gas production system can be enhanced, and the yield of the product gas (hydrogen containing gas) and energy efficiency can be improved. In addition, in the gas production device 1 and the second gas production device 16, during the gas ratio change step, an oxide can be formed on the catalyst surface, as well as formation of chemical species for activating the catalyst surface, and the oxide acts to inhibit carbon from being deposited by decomposition of the hydrocarbon-based gas 23 which is the source gas. Thus, while production performance for the hydrogen containing gas is enhanced, the yield of hydrogen gas in the hydrogen containing gas can be further improved and also energy efficiency can be further improved.

### Embodiment 4

Hereinafter, a gas production system according to Embodiment 4 will be described. The configuration and the operation of the gas production system according to Embodiment 4 are basically the same as those in Embodiment 3, while a difference is that a hydrogen sensor 26 is provided to the gas production device 1 and a second hydrogen sensor 27 is provided to the second gas production device 16.

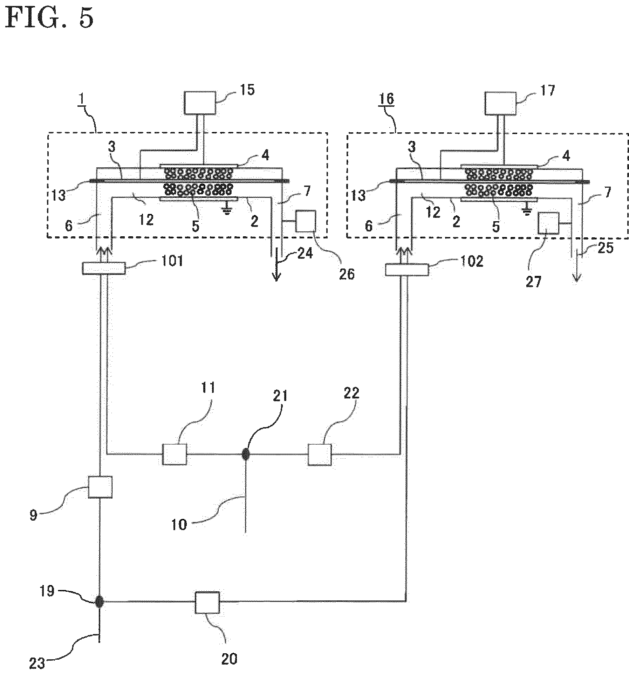

FIG. 5 schematically shows the configuration of the gas production system according to Embodiment 4. In the drawing, the same components and members as those of the gas production system according to Embodiment 3 are denoted by the same reference characters, and description thereof is omitted unless particularly needed.

In the gas production system according to Embodiment 4, the hydrogen sensor 26 provided to the gas production device 1 measures information, e.g., the concentration, about the yield of hydrogen gas in the hydrogen containing gas 24 produced by the gas production device 1. In addition, the second hydrogen sensor 27 provided to the second gas production device 16 measures information, e.g., the concentration, about the yield of hydrogen gas in the hydrogen containing gas 25 produced by the second gas production device 16. Then, the yields of hydrogen gases in the hydrogen containing gases 24, 25 are calculated from the measured values of the hydrogen sensors 26, 27.

When reduction in the yield of hydrogen gas in the hydrogen containing gas 24 is detected by the hydrogen sensor 26, the gas ratio change means 101 performs correction so as to increase the time CT1 for supplying the hydrocarbon-based gas 23 to the gas production device 1 in a supply amount smaller than the reference supply amount. Alternatively, when reduction in the yield of hydrogen gas in the hydrogen containing gas 24 is detected by the hydrogen sensor 26, supply of the hydrocarbon-based gas 23 to the gas production device 1 is completely stopped for a certain period. After the certain period has elapsed, supply of the hydrocarbon-based gas 23 to the gas production device 1 is restarted. The stop period may be determined in advance on the basis of experience values and the like. Further, depending on the condition of the yield of hydrogen gas after supply of the hydrocarbon-based gas 23 is restarted, for example, if recovery of the yield is slow, the stop period may be changed as appropriate, e.g., may be set to be longer.

Similarly, when reduction in the yield of hydrogen gas in the hydrogen containing gas 25 is detected by the second hydrogen sensor 27, the second gas ratio change means 102 performs correction so as to increase the time CT2 for supplying the hydrocarbon-based gas 23 to the second gas production device 16 in a supply amount smaller than the reference supply amount. Alternatively, when reduction in the yield of hydrogen gas in the hydrogen containing gas 25 is detected by the second hydrogen sensor 27, supply of the hydrocarbon-based gas 23 to the second gas production device 16 is completely stopped for a certain period. After the certain period has elapsed, supply of the hydrocarbon-based gas 23 to the second gas production device 16 is restarted.

The hydrogen sensor 26 and the second hydrogen sensor 27 are not particularly limited as long as information about the yield of hydrogen gas can be measured. For example, a known measurement device or analysis device such as a quadrupole mass analyzer or a gas chromatography may be used. However, it is preferable that information about the yield of hydrogen gas can be continuously measured online, and therefore it is preferable to use a quadrupole mass analyzer.

With the system operated as described above, the time for supplying the hydrocarbon-based gas 23 in a supply amount smaller than the reference supply amount is appropriately ensured, and thus it is possible to stably maintain the effect of promoting formation of chemical species on the catalyst surface and the effect of forming an oxide on the catalyst surface to inhibit deposition of carbon on the catalyst surface. Thus, it is possible to stably obtain the effect of improving the yield of hydrogen gas in the hydrogen containing gas and energy efficiency while enhancing production performance for the hydrogen containing gas.

As described above, the gas production system according to Embodiment 4 can provide the same effects as in Embodiment 3.

In addition, the gas production system according to Embodiment 4 is provided with the hydrogen sensor 26 capable of detecting reduction in the yield of hydrogen gas in the hydrogen containing gas 24, and the second hydrogen sensor 27 capable of detecting reduction in the yield of hydrogen gas in the hydrogen containing gas 25.

Therefore, the time CT1 for supplying the hydrocarbon-based gas 23 to the gas production device 1 in a supply amount smaller than the reference supply amount, and the time CT2 for supplying the hydrocarbon-based gas 23 to the second gas production device 16 in a supply amount smaller than the reference supply amount, can be increased in accordance with reduction in the yield of hydrogen gas.

In this way, the time for supplying the hydrocarbon-based gas 23 in a supply amount smaller than the reference supply amount is appropriately ensured, and thus it is possible to stably maintain the effect of promoting formation of chemical species on the catalyst surface and the effect of forming an oxide on the catalyst surface to inhibit deposition of carbon on the catalyst surface. Thus, it is possible to stably obtain the effect of improving the yield of hydrogen gas in the hydrogen containing gas and energy efficiency while enhancing production performance for the hydrogen containing gas.

In the above, it has been described that, while the supply amount of the oxidant gas 10 is kept constant, the supply amount of the source gas 8 or the hydrocarbon-based gas 23 is decreased, whereby the oxidant gas 10 is made abundant as compared to the source gas 8 or the hydrocarbon-based gas 23.

However, an actual gas supply method is not limited thereto. For example, while the supply amount of the source gas 8 or the hydrocarbon-based gas 23 is kept constant, the supply amount of the oxidant gas 10 may be increased for a certain period, thereby making the oxidant gas 10 abundant as compared to the source gas 8 or the hydrocarbon-based gas 23. Also in this case, the same effects can be obtained.

### LIST OF REFERENCE CHARACTERS

- 1: gas production device
- 2: reactor
- 3: first electrode
- 4: second electrode
- 5: catalyst layer
- 6: supply portion
- 7: flow-out portion
- 8: source gas
- 9: source gas supply means
- 10: oxidant gas
- 11: oxidant gas supply means
- 12: flow path
- 13: supporter
- 14: product gas
- 15: external power supply
- 16: second gas production device
- 17: second external power supply
- 18: second product gas
- 19: source gas branch portion
- 20: second source gas supply means
- 21: oxidant gas branch portion
- 22: second oxidant gas supply means
- 23: hydrocarbon-based gas
- 24: hydrogen containing gas
- 25: second hydrogen containing gas
- 26: hydrogen sensor
- 27: second hydrogen sensor
- 101: gas ratio change means
- 102: second gas ratio change means

## Claims

1. A gas production system which is configured to apply plasma to a catalyst in a reactor (2) and reform a supplied source gas (8, 23) and a supplied oxidant gas (10) to produce a product gas (14, 18, 24, 25),
the gas production system comprising:
- source gas supply means (9) for supplying the source gas (8, 23) to the reactor (2);
- oxidant gas supply means (11) for supplying the oxidant gas (10) to the reactor (2);
- gas ratio change means (101, 102) for changing a ratio between a supply amount of the source gas (8, 23) to be supplied to the reactor (2) by the source gas supply means (9) and a supply amount of the oxidant gas (10) to be supplied to the reactor (2) by the oxidant gas supply means (11), to make a state in which the oxidant gas (10) is abundant as compared to the source gas (8, 23); and plasma generation means (3, 4, 15, 17) for generating the plasma to be applied to the catalyst,
the gas production system further comprising:
- a gas production device (1, 16) having the reactor (2), a first electrode (3) and a second electrode (4) for generating the plasma therebetween, and a catalyst layer (5) provided in the reactor (2) and containing the catalyst; and
- an external power supply (15) which is connected to the first electrode (3) and the second electrode (4) and generates voltage (15, 17),
wherein the plasma is generated in the reactor (2) by the voltage generated by the external power supply (15, 17) and applied between the first electrode (3) and the second electrode (4),
wherein the catalyst layer (5) is provided in the space between the first electrode (3) and the second electrode (4).

2. The gas production system according to claim 1,
wherein the gas ratio change means (101, 102) that is configured to set a reference supply amount of the source gas (8, 23), set a time (ST) for supplying the source gas (8, 23) to the reactor (2) in the reference supply amount and a time (CT) for supplying the source gas (8, 23) to the reactor (2) in a supply amount smaller than the reference supply amount, and change the supply amount of the source gas (8, 23) to the reactor (2) on the basis of the set times (ST, CT).

3. The gas production system according to claim 2,
wherein the reference supply amount is set on the basis of a stoichiometric ratio determined by kinds and reaction of the source gas (8, 23) and the oxidant gas (10).

4. The gas production system according to claim 2 or 3,
wherein during the time (CT) for supplying the source gas (8) to the reactor in the supply amount smaller than the reference supply amount, the gas ratio change means (101, 102) sets the supply amount of the source gas (8, 23) to the reactor (2), to zero.

5. The gas production system according to any one of claims 1 to 4,
wherein the gas ratio change means (101, 102) that is configured to set the time (CT) for supplying the source gas (8, 23) to the reactor (2) in the reference supply amount and the time for supplying the source gas (8, 23) to the reactor (2) in the supply amount smaller than the reference supply amount, in accordance with a frequency of the voltage generated by the external power supply (15, 17).

6. The gas production system according to any one of claims 1 to 5,
wherein the second electrode (4) and the reactor (2) have cylindrical shapes, an outer circumference of the reactor (2) is coated with the second electrode (4), and
the first electrode (3) is placed on a center axis of the reactor (2).

7. The gas production system according to any one of claims 1 to 6,
wherein the reactor (2) is made from a dielectric material.

8. The gas production system according to any one of claims 1 to 7, comprising a plurality of the reactors (2) provided in parallel,
wherein the source gas supply means (9) is capable of switching which of the plurality of reactors (2) the source gas (8, 23) is to be supplied to.

9. The gas production system according to claim 8,
wherein during the time (ST) when supply of the source gas (8, 23) to one of the plurality of reactors (2) is set to the reference supply amount, the gas ratio change means (101, 102) sets supply of the source gas (8, 23) to at least another one of the reactors (2), to the supply amount smaller than the reference supply amount.

10. The gas production system according to claim 9,
wherein the reactor (2) is provided with a hydrogen sensor (26, 27), and
the gas ratio change means (101, 102) that is configured to change the ratio between the supply amount of the hydrocarbon-based gas (23) and the supply amount of the oxidant gas (10), on the basis of a measured value of the hydrogen sensor (26, 27).

11. The gas production system according to claim 10,
wherein the gas ratio change means (101, 102) that is configured to stop supply of the hydrocarbon-based gas (23) to the reactor (2) for a predetermined time (CT) on the basis of the measured value of the hydrogen sensor (26, 27).

12. A gas production method in which plasma is applied to a catalyst in a reactor (2) and a supplied source gas (8, 23) and a supplied oxidant gas (10) are reformed to produce a product gas (14, 18, 24, 25),
the gas production method comprising:
- a source gas supply step (S4) of supplying the source gas (8, 23) to a catalyst layer (5) containing the catalyst;
- an oxidant gas supply step (S2, S4) of supplying the oxidant gas (10) to the catalyst layer (5);
- a plasma application step (S4) of applying the plasma to the catalyst layer (5);
- a reforming step (S4) of producing the product gas (14, 18, 24, 25) from the source gas (8, 23) and the oxidant gas (10); and
- a gas ratio change step (S7) of changing a ratio between a supply amount of the source gas (8, 23) to be supplied to the catalyst layer (5) in the source gas supply step (S4) and a supply amount of the oxidant gas (10) to be supplied to the catalyst layer (5) in the oxidant gas supply step (S2, S4), thus supplying the source gas (8, 23) and the oxidant gas (10) in a state in which the oxidant gas (10) is abundant as compared to the source gas (8, 23),
wherein the catalyst layer (5) is provided in the space between the first electrode (3) and the second electrode (4).

13. The gas production method according to claim 12,
wherein in the source gas supply step (S4), the source gas (8, 23) is supplied in a reference supply amount for a predetermined time (ST), and in the gas ratio change step (S7), the source gas (8, 23) is supplied in a supply amount smaller than the reference supply amount, for a predetermined time (CT).

14. The gas production method according to claim 13,
wherein the time (ST) for supplying the source gas (8, 23) in the source gas supply step (S4) and the time (CT) for supplying the source gas (8, 23) in the gas ratio change step (S7) are set in accordance with a frequency of voltage for generating the plasma in the plasma application step (S4).

15. The gas production method according to claim 13 or 14,
wherein in the gas ratio change step (S7), supply of the source gas (8, 23) is stopped.

16. The gas production method according to any one of claims 13 to 15,
using a plurality of the reactors (2) having the catalyst layers (5),
wherein the steps (S4, S7) for the reactors (2) are sequentially switched so that, while at least one of the plurality of reactors (2) is undergoing the source gas supply step (S4), not all the other reactors (2) undergo the source gas supply step (S4).

17. The gas production method according to any one of claims 12 to 16,
wherein the oxidant gas (10) is one kind of gas or a mixed gas of two or more kinds of gases, selected from water vapor, carbon dioxide gas, and oxygen gas.

18. The gas production method according to any one of claims 12 to 17,
wherein the source gas (8) is a hydrocarbon-based gas (23), and
the product gas (14, 18, 24, 25) is a hydrogen containing gas (24).

## Patentansprüche

1. Gaserzeugungssystem, das so konfiguriert ist, dass es Plasma auf einen Katalysator in einem Reaktor (2) anwendet und ein zugeführtes Quellengas (8, 23) und ein zugeführtes Oxidationsmittelgas (10) reformiert, um ein Produktgas (14, 18, 24, 25) zu erzeugen,
wobei das Gaserzeugungssystem Folgendes aufweist:
- eine Quellengas-Zufuhreinrichtung (9) zum Zuführen des Quellengases (8, 23) zum Reaktor (2);
- eine Oxidationsmittelgas-Zufuhreinrichtung (11) zum Zuführen des Oxidationsmittelgases (10) zum Reaktor (2);
- eine Gasverhältnis-Änderungseinrichtung (101, 102) zum Ändern eines Verhältnisses zwischen einer Zufuhrmenge des Quellengases (8, 23), das dem Reaktor (2) durch das Quellengas-Zufuhreinrichtung (9) zuzuführen ist, und einer Zufuhrmenge des Oxidationsmittelgases (10), das dem Reaktor (2) durch das Oxidationsmittelgas-Zufuhreinrichtung (11) zuzuführen ist, um einen Zustand herzustellen, in dem das Oxidationsmittelgas (10) im Vergleich zum Quellengas (8, 23) reichlich vorhanden ist; und
- eine Plasmaerzeugungseinrichtung (3, 4, 15, 17) zur Erzeugung des Plasmas, das auf den Katalysator anzuwenden ist,
wobei das Gaserzeugungssystem ferner Folgendes aufweist:
- eine Gaserzeugungsvorrichtung (1, 16) mit dem Reaktor (2), einer ersten Elektrode (3) und einer zweiten Elektrode (4) zur Erzeugung des Plasmas dazwischen und einer Katalysatorschicht (5), die in dem Reaktor (2) ausgebildet ist und den Katalysator enthält; und
- eine externe Stromversorgung (15), die mit der ersten Elektrode (3) und der zweiten Elektrode (4) verbunden ist und eine Spannung (15, 17) erzeugt, wobei das Plasma in dem Reaktor (2) durch die von der externen Stromversorgung (15, 17) erzeugte und zwischen der ersten Elektrode (3) und der zweiten Elektrode (4) angelegte Spannung erzeugt wird,
wobei die Katalysatorschicht (5) in dem Raum zwischen der ersten Elektrode (3) und der zweiten Elektrode (4) ausgebildet ist.

2. Gaserzeugungssystem nach Anspruch 1,
wobei die Gasverhältnis-Änderungseinrichtung (101, 102), die so konfiguriert ist, dass sie eine Referenzzufuhrmenge des Quellengases (8, 23) einstellt, eine Zeit (ST) zum Zuführen des Quellengases (8, 23) zu dem Reaktor (2) in der Referenzzufuhrmenge und eine Zeit (CT) zum Zuführen des Quellengases (8, 23) zu dem Reaktor (2) in einer Zufuhrmenge, die kleiner als die Referenzzufuhrmenge ist, einstellt und die Zufuhrmenge des Quellengases (8, 23) zu dem Reaktor (2) auf der Basis der eingestellten Zeiten (ST, CT) ändert.

3. Gaserzeugungssystem nach Anspruch 2,
wobei die Referenzzufuhrmenge auf der Grundlage eines stöchiometrischen Verhältnisses eingestellt wird, das durch Arten und Reaktion des Quellengases (8, 23) und des Oxidationsmittelgases (10) bestimmt wird.

4. Gaserzeugungssystem nach Anspruch 2 oder 3,
wobei während der Zeit (CT) für die Zufuhr des Quellengases (8) zu dem Reaktor in der Zufuhrmenge, die kleiner ist als die Referenzzufuhrmenge, die Gasverhältnis-Änderungseinrichtung (101, 102) die Zufuhrmenge des Quellengases (8, 23) zu dem Reaktor (2) auf Null setzt.

5. Gaserzeugungssystem nach einem der Ansprüche 1 bis 4,
wobei die Gasverhältnis-Änderungseinrichtung (101, 102) konfiguriert ist, die Zeit (CT) für die Zufuhr des Quellengases (8, 23) zu dem Reaktor (2) in der Referenzzufuhrmenge und die Zeit für die Zufuhr des Quellengases (8, 23) zu dem Reaktor (2) in der Zufuhrmenge kleiner einzustellen als die Referenzzufuhrmenge, in Abhängigkeit von einer Frequenz der von der externen Stromversorgung (15, 17) erzeugten Spannung.

6. Gaserzeugungssystem nach einem der Ansprüche 1 bis 5,
wobei die zweite Elektrode (4) und der Reaktor (2) eine zylindrische Form haben,
ein Außenumfang des Reaktors (2) mit der zweiten Elektrode (4) beschichtet ist, und
die erste Elektrode (3) auf einer Mittelachse des Reaktors (2) angeordnet ist.

7. Gaserzeugungssystem nach einem der Ansprüche 1 bis 6,
wobei der Reaktor (2) aus einem dielektrischen Material hergestellt ist.

8. Gaserzeugungssystem nach einem der Ansprüche 1 bis 7,
welches eine Vielzahl von parallelgeschalteten Reaktoren (2) aufweist, wobei die Quellengas-Zufuhreinrichtung (9) in der Lage ist, umzuschalten, welchem der Vielzahl von Reaktoren (2) das Quellengas (8, 23) zugeführt werden soll.

9. Gaserzeugungssystem nach Anspruch 8,
wobei während der Zeit (ST), in der die Zufuhr des Quellengases (8, 23) zu einem der Vielzahl von Reaktoren (2) auf die Referenzzufuhrmenge eingestellt ist, die Gasverhältnis-Änderungseinrichtung (101, 102) die Zufuhr des Quellengases (8, 23) zu mindestens einem anderen der Reaktoren (2) auf die Zufuhrmenge einstellt, die kleiner als die Referenzzufuhrmenge ist.

10. Gaserzeugungssystem nach Anspruch 9,
wobei der Reaktor (2) mit einem Wasserstoffsensor (26, 27) ausgebildet ist, und
wobei die Gasverhältnis-Änderungseinrichtung (101, 102) so konfiguriert ist, dass sie das Verhältnis zwischen der Zufuhrmenge des Gases auf Kohlenwasserstoffbasis (23) und der Zufuhrmenge des Oxidationsmittelgases (10) auf der Grundlage eines Messwerts des Wasserstoffsensors (26, 27) ändert.

11. Gaserzeugungssystem nach Anspruch 10,
wobei das Gasverhältnis-Änderungseinrichtung (101, 102) so konfiguriert ist, dass sie die Zufuhr des Gases auf Kohlenwasserstoffbasis (23) zu dem Reaktor (2) für eine vorbestimmte Zeit (CT) auf der Grundlage des gemessenen Wertes des Wasserstoffsensors (26, 27) stoppt.

12. Gaserzeugungsverfahren, bei dem Plasma auf einen Katalysator in einem Reaktor (2) aufgebracht wird und ein zugeführtes Quellengas (8, 23) und ein zugeführtes Oxidationsmittelgas (10) reformiert werden, um ein Produktgas (14, 18, 24, 25) zu erzeugen,
wobei das Gaserzeugungsverfahren Folgendes aufweist:
- einen Quellengas-Zufuhrschritt (S4) für die Zufuhr des Quellengases (8, 23) zu einer Katalysatorschicht (5), die den Katalysator enthält;
- einen Oxidationsmittelgas-Zufuhrschritt (S2, S4) für die Zufuhr des Oxidationsmittelgases (10) zu der Katalysatorschicht (5);
- einen Schritt (S4) zum Aufbringen des Plasmas auf die Katalysatorschicht (5);
- einen Reformierungsschritt (S4) zur Erzeugung des Produktgases (14, 18, 24, 25) aus dem Quellengas (8, 23) und dem Oxidationsmittelgas (10); und
- einen Gasverhältnis-Änderungsschritt (S7) zum Ändern eines Verhältnisses zwischen einer Zufuhrmenge des Quellengases (8, 23), das der Katalysatorschicht (5) in dem Quellengas-Zufuhrschritt (S4) zugeführt werden soll, und einer Zufuhrmenge des Oxidationsmittelgases (10), das der Katalysatorschicht (5) in dem Oxidationsmittelgas-Zufuhrschritt (S2, S4) zugeführt werden soll, so dass das Quellengas (8, 23) und das Oxidationsmittelgas (10) in einem Zustand zugeführt werden, in dem das Oxidationsmittelgas (10) im Vergleich zu dem Quellengas (8, 23) reichlich vorhanden ist,
wobei die Katalysatorschicht (5) in dem Raum zwischen der ersten Elektrode (3) und der zweiten Elektrode (4) ausgebildet ist.

13. Gaserzeugungsverfahren nach Anspruch 12,
wobei in dem Quellengas-Zufuhrschritt (S4) das Quellengas (8, 23) in einer Referenzzufuhrmenge für eine vorbestimmte Zeit (ST) zugeführt wird und in dem Gasverhältnis-Änderungsschritt (S7) das Quellengas (8, 23) für eine vorbestimmte Zeit (CT) in einer Zufuhrmenge zugeführt wird, die kleiner ist als die Referenzzufuhrmenge,.

14. Gaserzeugungsverfahren nach Anspruch 13,
wobei die Zeit (ST) für die Zufuhr des Quellengases (8, 23) in dem Quellengas-Zufuhrschritt (S4) und die Zeit (CT) für die Zufuhr des Quellengases (8, 23) im Gasverhältnis-Änderungsschritt (S7) in Abhängigkeit von einer Frequenz der Spannung zur Erzeugung des Plasmas im Schritt (S4) der Aufbringung des Plasmas eingestellt werden.

15. Gaserzeugungsverfahren nach Anspruch 13 oder 14,
wobei in dem Gasverhältnis-Änderungsschritt (S7) die Zufuhr des Quellengases (8, 23) gestoppt wird.

16. Gaserzeugungsverfahren nach einem der Ansprüche 13 bis 15,
welches eine Vielzahl der Reaktoren (2) mit den Katalysatorschichten (5) verwendet,
wobei die Schritte (S4, S7) für die Reaktoren (2) sequentiell geschaltet werden, so dass, während mindestens einer der Vielzahl von Reaktoren (2) den Quellengas-Zufuhrschritt (S4) durchläuft, nicht alle anderen Reaktoren (2) den Quellengas-Zufuhrschritt (S4) durchlaufen.

17. Gaserzeugungsverfahren nach einem der Ansprüche 12 bis 16,
wobei das Oxidationsmittelgas (10) eine Art von Gas oder ein Mischgas aus zwei oder mehr Arten von Gasen ist, ausgewählt aus Wasserdampf, Kohlendioxidgas und Sauerstoffgas.

18. Gaserzeugungsverfahren nach einem der Ansprüche 12 bis 17,
wobei das Quellengas (8) ein Gas auf Kohlenwasserstoffbasis (23) ist, und wobei das Produktgas (14, 18, 24, 25) ein wasserstoffhaltiges Gas (24) ist.

## Revendications

1. Système de production de gaz qui est configuré pour appliquer un plasma sur un catalyseur dans un réacteur (2) et pour reformer un gaz source alimenté (8, 23) et un gaz oxydant alimenté (10) pour produire un gaz produit (14, 18, 24, 25),
le système de production de gaz comprenant :
- un moyen d'alimentation de gaz source (9) destiné à alimenter le gaz source (8, 23) au réacteur (2) ;
- un moyen d'alimentation de gaz oxydant (11) destiné à alimenter le gaz oxydant (10) au réacteur (2) ;
- un moyen de changement de rapport de gaz (101, 102) destiné à changer un rapport entre une quantité d'alimentation du gaz source (8, 23) à alimenter au réacteur (2) par l'intermédiaire du moyen d'alimentation de gaz source (9) et une quantité d'alimentation du gaz oxydant (10) à alimenter au réacteur (2) par l'intermédiaire du moyen d'alimentation de gaz oxydant (11), pour obtenir un état dans lequel le gaz oxydant (10) est abondant par comparaison avec le gaz source (8, 23) ; et
- un moyen de génération de plasma (3, 4, 15, 17) destiné à générer le plasma devant être appliqué sur le catalyseur,
le système de production de gas comprenant en outre :
- un dispositif de production de gaz (1, 16) ayant le réacteur (2), une première électrode (3) et une seconde électrode (4) destinées à générer le plasma entre celles-ci, et une couche de catalyseur (5) prévue dans le réacteur (2) et contenant le catalyseur ; et
- une alimentation de puissance externe (15) qui est connectée à la première électrode (3) et à la seconde électrode (4) et qui génère une tension (15, 17),
dans lequel le plasma est généré dans le réacteur (2) via la tension générée par l'alimentation de puissance externe (15, 17) et appliquée entre la première électrode (3) et la seconde électrode (4),
dans lequel la couche de catalyseur (5) est prévue dans l'espace entre la première électrode (3) et la seconde électrode (4).

2. Système de production de gaz selon la revendication 1,
dans lequel le moyen de changement de rapport de gaz (101, 102) est configuré pour fixer une quantité d'alimentation de référence du gaz source (8, 23), fixer un temps (ST) d'alimentation du gaz source (8, 23) au réacteur (2) dans la quantité d'alimentation de référence, et un temps (CT) d'alimentation du gaz source (8, 23) au réacteur (2) dans une quantité d'alimentation inférieure à la quantité d'alimentation de référence, et changer la quantité d'alimentation du gaz source (8, 23) au réacteur (2) sur la base des temps fixés (ST, CT).

3. Système de production de gaz selon la revendication 2,
dans lequel la quantité d'alimentation de référence est fixée sur la base d'un rapport stœchiométrique déterminé par des types et une réaction du gaz source (8, 23) et du gaz oxydant (10).

4. Système de production de gaz selon la revendication 2 ou 3,
dans lequel, pendant le temps (CT) d'alimentation du gaz source (8) au réacteur dans la quantité d'alimentation inférieure à la quantité d'alimentation de référence, le moyen de changement de rapport de gaz (101, 102) fixe la quantité d'alimentation du gaz source (8, 23) au réacteur (2) à zéro.

5. Système de production de gaz selon l'une quelconque des revendications 1 à 4,
dans lequel le moyen de changement de rapport de gaz (101, 102) est configuré pour fixer le temps (CT) d'alimentation du gaz source (8, 23) au réacteur (2) dans la quantité d'alimentation de référence et le temps d'alimentation du gaz source (8, 23) au réacteur (2) dans la quantité d'alimentation inférieure à la quantité d'alimentation de référence, en fonction d'une fréquence de la tension générée par l'alimentation de puissance externe (15, 17).

6. Système de production de gaz selon l'une quelconque des revendications 1 à 5,
dans lequel la seconde électrode (4) et le réacteur (2) ont des formes cylindriques,
une circonférence extérieure du réacteur (2) est revêtue de la seconde électrode (4), et
la première électrode (3) est placée sur un axe central du réacteur (2).

7. Système de production de gaz selon l'une quelconque des revendications 1 à 6,
dans lequel le réacteur (2) est fait à partir d'un matériau diélectrique.

8. Système de production de gaz selon l'une quelconque des revendications 1 à 7,
comprenant une pluralité de réacteurs (2) prévus en parallèle,
dans lequel le moyen d'alimentation de gaz source (9) est capable de commuter vers lequel de la pluralité de réacteur (2) le gaz source (8, 23) doit être alimenté.

9. Système de production de gaz selon la revendication 8,
dans lequel, pendant le temps (ST) où l'alimentation du gaz source (8, 23) à l'un de la pluralité de réacteurs (2) est fixé à la quantité d'alimentation de référence, le moyen de changement de rapport de gaz (101, 102) fixe l'alimentation du gaz source (8, 23) à au moins un autre des réacteurs (2), à la quantité d'alimentation inférieure à la quantité d'alimentation de référence.

10. Système de production de gaz selon la revendication 9,
dans lequel le réacteur (2) est doté d'un capteur d'hydrogène (26, 27), et le moyen de changement de rapport de gaz (101, 102) est configuré pour changer le rapport entre la quantité d'alimentation du gaz à base d'hydrocarbures (23) et la quantité d'alimentation du gaz oxydant (10), sur la base d'une valeur mesurée du capteur d'hydrogène (26, 27).

11. Système de production de gaz selon la revendication 10,
dans lequel le moyen de changement de rapport de gaz (101, 102) est configuré pour arrêter l'alimentation du gaz à base d'hydrocarbures (23) au réacteur (2) pendant un temps prédéterminé (CT) sur la base de la valeur mesurée du capteur d'hydrogène (26, 27).

12. Procédé de production de gaz dans lequel un plasma est appliqué sur un catalyseur dans un réacteur (2), et un gaz source alimenté (8, 23) et un gaz oxydant alimenté (10) sont reformés pour produire un gaz produit (14, 18, 24, 25),
le procédé de production de gaz comprenant :
- une étape d'alimentation de gaz source (S4) consistant à alimenter le gaz source (8, 23) à une couche de catalyseur (5) contenant le catalyseur ;
- une étape d'alimentation de gaz oxydant (S2, S4) consistant à alimenter le gaz oxydant (10) à la couche de catalyseur (5) ;
- une étape d'application de plasma (S4) consistant à appliquer le plasma sur la couche de catalyseur (5) ;
- une étape de reformation (S4) consistant à produire le gaz produit (14, 18, 24, 25) à partir du gaz source (8, 23) et du gaz oxydant (10) ; et
- une étape de changement de rapport de gaz (S7) consistant à changer un rapport entre une quantité d'alimentation du gaz source (8, 23) à alimenter à la couche de catalyseur (5) dans l'étape d'alimentation de gaz source (S4) et une quantité d'alimentation de gaz oxydant (10) à alimenter à la couche de catalyseur (5) dans l'étape d'alimentation de gaz oxydant (S2, S4), alimentant ainsi le gaz source (8, 23) et le gaz oxydant (10) dans un état dans lequel le gaz oxydant (10) est abondant par comparaison avec le gaz source (8, 23),
dans lequel la couche de catalyseur (5) est prévue dans l'espace entre la première électrode (3) et la seconde électrode (4).

13. Procédé de production de gaz selon la revendication 12,
dans lequel, dans l'étape d'alimentation de gaz source (S4), le gaz source (8, 23) est alimenté dans une quantité d'alimentation de référence pendant un temps prédéterminé (ST), et, dans l'étape de changement de rapport de gaz (S7), le gaz source (8, 23) est appliqué dans une quantité d'alimentation inférieure à la quantité d'alimentation de référence, pendant un temps prédéterminé (CT).

14. Procédé de production de gaz selon la revendication 13,
dans lequel le temps (ST) d'alimentation du gaz source (8, 23) dans l'étape d'alimentation de gaz source (S4) et le temps (CT) d'alimentation de gaz source (8, 23) dans l'étape de changement de rapport de gaz (S7) sont fixés en fonction d'une fréquence de tension pour générer le plasma dans l'étape d'application de plasma (S4).

15. Procédé de production de gaz selon la revendication 13 ou 14,
dans lequel, dans l'étape de changement de rapport de gaz (S7), l'alimentation du gaz source (8, 23) est arrêtée.

16. Procédé de production de gaz selon l'une quelconque des revendications 13 à 15,
utilisant une pluralité de réacteurs (2) ayant les couches de catalyseur (5), dans lequel les étapes (S4, S7) pour les réacteurs (2) sont commutées séquentiellement de telle sorte que, tandis que l'un au moins de la pluralité de réacteurs (2) est soumis à l'étape d'alimentation de gaz (S4), tous les autres réacteurs (2) ne sont pas soumis à l'étape d'alimentation de gaz source (S4).

17. Procédé de production de gaz selon l'une quelconque des revendications 12 à 16,
dans lequel le gaz oxydant (10) est un type de gaz ou un gaz mélangé de deux ou plusieurs types de gaz sélectionnés parmi : vapeur d'eau, dioxyde de carbone gazeux et oxygène gazeux.

18. Procédé de production de gaz selon l'une quelconque des revendications 12 à 17,
dans lequel le gaz source (8) est un gaz à base d'hydrocarbures (23), et le gaz produit (14, 18, 24, 25) est un gaz contenant de l'hydrogène (24).
